# EUROPÄISCHE PATENTSCHRIFT

(11) **EP 1 815 710 B1**
(45) Veröffentlichungstag und Bekanntmachung des Hinweises auf die Patenterteilung: **25.08.2010**
(21) Anmeldenummer: 05849168.9
(22) Anmeldetag: 24.11.2005
(51) Int. Cl.: H04W 24/04

(54) **Verfahren und System zur Unterstützung der Dienstekontinuitaet für mobile Kommunikation über unterschiedliche Zugangsnetzwerke**
Method and system for supporting service continuity for mobile communication over different access networks
Procédé et système d'appui de continuité de service pour communication mobile sur differents röseaux d'accés

(30) Priorität: 26.11.2004 DE 102004057311
(43) Veröffentlichungstag der Anmeldung: 08.08.2007
(73) Patentinhaber: T-Mobile International AG, 53227 Bonn (DE)
(72) Erfinder: KOTULLA, Andreas, 53757 Sankt Augustin (DE); SCHAUB, Alexander, 53639 Königswinter (DE)
(74) Vertreter: Riebling, Peter
(86) Internationale Anmeldenummer: PCT/DE2005/002117
(87) Internationale Veröffentlichungsnummer: WO 2006/056184

(56) Entgegenhaltungen:
- US-A1- 2002 059 434
- US-A1- 2002 122 394
- US-A1- 2003 100 308

## Beschreibung

Die Erfindung betrifft ein Verfahren und System zur Unterstützung von Dienstekontinuität für mobile Kommunikation über unterschiedliche Zugangsnetzwerke, und insbesondere ein Verfahren und System zum Umschalten zwischen mindestens zwei verschiedenen Zugangsnetzwerktechnologien bei einem mobilen Endgerät für einen paketorientierten Datenverkehr zu einer Zieladresse eines Zielnetzwerkes ohne Unterbrechung einer aktiven Netzwerkapplikation oder Dienstes.

Im Mobilfunksektor gibt es verschiedene Zugangstechnologien, wie z. B. WLAN-, UMTS-, GPRS-Zugangsnetzwerke, zu paketorientierten Datennetzen, wie z. B. dem Internet. Heutige mobile Endgeräte und Netzwerke sind nicht in der Lage, die Zugangstechnologie während einer aktiven Verbindung zum Datennetz zu ändern. Dienste oder Applikationen, die beispielsweise über eine erste Zugangstechnologie, z.B. ein WLAN-Netzwerk, aktiv sind, können daher nicht unterbrechungsfrei auf eine gleichzeitig verfügbare zweite Zugangstechnologie, z.B. ein UMTS-Netzwerk, überführt werden, wenn der Transportweg des ersten Zugangsnetzes während der Anwendung unterbrochen wird.

Bei mobiler Internetnutzung (IP-Applikation) sollte eine bestehende Datenverbindung von Applikationen auf dem mobilen Endgerät auch nicht unterbrochen werden, wenn der Benutzer seinen Standort im Netzwerk ändert. Im Gegenteil sollten alle Verbindungs- und Schnittstellenänderungen z. B. bei einem Wechsel zwischen unterschiedlichen Zugangsnetzwerken (Mobilfunknetz, WLAN, Bluetooth etc.) automatisch erfolgen, so dass der Benutzer vorzugsweise davon nichts bemerkt. Möchte ein Benutzer beispielsweise zwischen zwei verschiedenen Zugangsnetzwerken wechseln, während eine IP-Applikation ausgeführt wird, wird in dem Moment, in dem er den Versorgungsbereich des alten Zugangsnetzwerks verlässt, die IP-Verbindung unterbrochen. Diese wird mindestens solange unterbrochen sein, bis eine Anbindung an ein neues verfügbares Zugangsnetzwerk stattgefunden hat. Vorteilhaft möchte ein Benutzer an jedem Ort auch automatisch mit dem preisgünstigsten bzw. leistungsfähigsten aller verfügbaren mobilen Zugangsnetzwerke verbunden werden, ohne hierzu lange manuelle Auswahlprozeduren in Kauf nehmen zu müssen.

Beispielsweise befindet sich ein mobiler Teilnehmer im Versorgungsbereich eines WLAN-Hotspots und hat eine aktive Internetverbindung. Gleichzeitig befindet er sich in einem UMTS-Versorgungsbereich. Der Teilnehmer beginnt z. B. ein VoIP Telefongespräch (VoIP: Voice over IP), das aufgrund der höheren Datenrate und des geringeren Preises über den WLAN-Transportweg abgewickelt wird. Während des Gesprächs entfernt sich der Teilnehmer von dem WLAN-Hotspot, bis die Abdeckung zu gering für die Aufrechterhaltung des Dienstes wird. Die Verbindung bricht ab. Idealerweise sollte das Gespräch jedoch nicht unterbrochen werden, sondern es sollte unbemerkt auf einen anderen verfügbaren Transportweg, also UMTS, umgeschaltet werden.

Es gibt bereits Ansätze, die dieses Problem adressieren. Diese Lösungen beruhen jedoch auf einer aufwändigen und kostspieligen Anpassung oder Erweiterung der Infrastrukturen der involvierten Netztechnologien, z.B. WLAN, 2G, 3G. Genannt sei beispielhaft die Veröffentlichung EP 1 271 896 A2 der Swisscom Mobile AG und UMA.

Die US 2002/059434 A1 offenbart ein Verfahren zum Umschalten zwischen mindestens zwei verschiedenen Zugangsnetzwerktechnologien bei einem mobilen Endgerät während einer paketorientierten Datenverbindung mit einer Zieladresse eines Zielnetzwerks, wobei mittels einer im Endgerät eingerichteten Zugangssteuerungsapplikation am Standort des Endgerätes verfügbare Zugangsnetzwerke zum Zielnetzwerk ermittelt werden und die Verbindung unter Berücksichtigung der Verbindungskosten, der Übertragungsgeschwindigkeit, oder der Dienstgüte über das jeweils verfügbare Zugangsnetzwerk an die gewünschte Zieladresse geroutet wird und umgekehrt. Diese Lösung baut im OSI-Schichtenmodell auf die Schicht 2 (Sicherungsschicht) bzw. Schicht 3 (Vermittlungsschicht) auf und dadurch werden spezielle Endgeräte notwendig bzw. es sind Änderungen der Hardware und /oder Software der Endgeräte/Clienten erforderlich.

Die US 2003/100308 A1 und die US 2002/122394 A1 offenbaren ähnliche Verfahren ebenfalls basierend auf einem Eingriff in die OSI-Schichten 2 und 3.

Es ist die Aufgabe der Erfindung, ein Verfahren und ein System der eingangs genannten Art anzugeben, mittels denen bei einem mobilen Endgerät ein Umschalten von einem Zugangsnetz zu einem anderen ohne Unterbrechung einer aktiven Applikationen durchgeführt werden kann, bei nur geringen Änderungen auf Seiten des Endgeräts und des Kommunikationsnetzwerks.

Diese Aufgabe wird durch ein Verfahren mit den Merkmalen des Anspruchs 1 und ein System mit den Merkmalen des Anspruchs 7 gelöst.

Vorteilhafte Ausgestaltungen und Weiterbildungen der Erfindung sind in den abhängigen Patentansprüchen angegeben.

Das erfindungsgemäße Verfahren ermöglicht unterbrechungsfreie IP-Dienste bei einem Wechsel des Zugangsnetzes und damit eine Dienstekontinuität (Service Continuity), ohne Teile des (Kern-)Netzes anpassen oder ergänzen zu müssen.

Das Prinzip der Erfindung funktioniert bei jedem Wechsel der verwendeten Zugangstechnologie, beispielsweise UMTS, WLAN, GPRS, Bluetooth, etc., und auch über mehrere Funkzellen oder Versorgungsbereiche der selben Zugangstechnologie.

Die Lösung basiert im wesentlichen auf neuartigen Zugangssteuerungsapplikationen in Form von Software-Komponenten, wovon eine erste auf dem Endgerät in Form eines Proxy A und eine zweite im Zielnetzwerk in Form eines Proxy B installiert ist.

Bisherige Verfahren zur unterbrechungsfreien Mobilität zwischen WLAN und GPRS /UMTS benötigten umfangreiche und kostspielige Änderungen in der Netzinfrastruktur. Die vorgeschlagene Lösung benötigt nur entsprechende Proxy-Software auf dem mobilen Endgerät und in einem Netzelement (Server) des Zielnetzes. Für den Benutzer wird so ein "Roaming" zwischen verschiedenen Zugangsnetznetzwerken ermöglicht, ohne dass bestehende Applikationen oder Kommunikationsdienste unterbrochen werden müssen.

Damit können z. B. in einem WLAN Hotspot kostengünstig VoIP-Gespräche geführt werden. Beim Verlassen des Hotspots wird das Gespräch automatisch über ein anderes verfügbares Zugangsnetz, z.B. UMTS, weitergeführt.

Natürlich gilt dies nicht nur für VoIP-Dienste, sondern ebenfalls für alle anderen IP-Applikationen bzw. WAP-Applikationen (Wireless Application Protocol).

Die Zugangssteuerungsapplikationen Proxy A und Proxy B sind also als Softwareapplikationen zu verstehen, die zwischen die Endgeräteapplikationen und die Internetserverapplikationen und umgekehrt geschaltet sind. Jede Kommunikation zwischen einer Applikation auf einem Endgerät und einem paketorientierten Datendienst wird über die beiden Proxys A und B abgewickelt, die unbemerkt von der auf dem Endgerät ausgeführten Applikation oder dem Dienst den jeweils verfügbaren bzw. günstigsten Transportweg zum Austausch der Datenpakete zwischen dem Endgerät und der Internetapplikation verwenden.

Proxy A, der auf dem mobilen Endgerät des Kunden installiert ist, dient insbesondere der Überwachung, Verfolgung und dem Nachhalten der verfügbaren Transportwege, sprich der verfügbaren Zugangsnetze für paketorientierten IP-Verkehr. Wenn das Endgerät z. B. sowohl für die Nutzung von WLAN als auch UMTS eingerichtet ist, überwacht Proxy A, welcher der beiden Transportwege momentan verfügbar ist und wählt anhand von durch den Nutzer wählbaren Kriterien einen bevorzugten Transportweg aus.

Zur Nutzung der beschriebenen Dienstekontinuität muss der Teilnehmer natürlich in allen Netzen, die verwendet werden sollen, eine Nutzungsberechtigung haben, z.B. aktives Teilnehmerverhältnis in einem Mobilfunknetz und eine Zugangsberechtigung in den zu verwendenden WLAN-Hotspots.

Ferner muss der gesamte Datenverkehr zwischen zwei Endpunkten über die beiden beschriebenen Proxys A und B geroutet werden.

Die verwendete Applikation, z. B. Web-Browser, VoIP-Client, etc., muss in der Lage sein, einen Proxy zu konfigurieren oder das verwendete

Übertragungsprotokoll muss eine Verwendung eines transparenten Proxy ermöglichen. Das bedeutet, dass Zugangsanfragen seitens einer Endgeräteapplikation nicht direkt an die Zieladresse gesendet werden, sondern zuerst an die Adresse des entsprechend konfigurierten Proxy (Proxy A bzw. Proxy B).

Eine Überwachung der verfügbaren Transportwege geschieht dadurch, dass Proxy A und Proxy B sich in regelmäßigen Abständen Nachrichten über die zur Verfügung stehenden Transportwege senden. Derartige Nachrichten werden auch als "Heartbeat" oder "keep alive messages" bezeichnet. Bei Ausfall eines Transportweges wird gegebenenfalls der aktive Transportweg angepasst. Detektiert Proxy A ein neues mögliches Zugangsnetzwerk, z. B. weil sich der Nutzer in den Versorgungsbereich eines neuen WLAN-Hotspots bewegt hat, registriert sich der Proxy A gegebenenfalls automatisch in dem neuen Zugangsnetzwerk und merkt sich die mögliche Verbindung. Insbesondere kann durch die permanente Überwachung der physikalischen Netzwerkschnittstellen und ihrer Eigenschaften z. B. automatisch gewechselt werden, falls physikalische Netzwerkschnittstellen mit besseren Übertragungsoptionen als die momentan Aktive verfügbar werden.

Ein Ausführungsbeispiel der Erfindung wird nun anhand der Zeichnungsfigur erläutert. In den Zeichnungen und der zugehörenden Beschreibung sind weitere Merkmale, Vorteile und Ausgestaltungen der Erfindung offenbart.

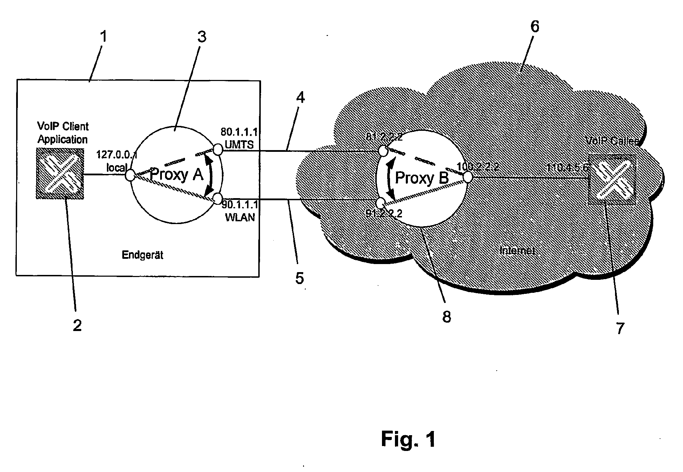

Figur 1 zeigt schematisch den Aufbau und die Funktionsweise des erfindungsgemäßen Verfahrens am Beispiel von UMTS und WLAN-Zugangsnetzen mit zwei möglichen Transportwegen und einer VoIP-Applikation.

Ein Benutzer startet auf einem mobilen Endgerät 1, z.B. einem Mobiltelefon, eine Applikation zum Telefonieren über das Internet, auch bezeichnet als VoIP-Applikation 2 (Voice over IP). Es soll eine IP-Verbindung zu einer mit dem Internet verbundenen Gegenstelle 7 hergestellt werden. Bei der Gegenstelle 7 kann es sich z.B. um einen an das Internet angebundenen Personal Computer handeln.

Zur Herstellung der gewünschten Verbindung muss der anrufenden Stelle 1 die der gerufenen Gegenstelle 7 zugewiesene Netzwerkadresse, z.B. IP-Adresse 110.4.5.6, bekannt sein. Außerdem benötigt Stelle 1 eine IP-Adresse im verwendeten Netzwerk, in Fig. 1 sind dies entweder die Adresse 80.1.1.1 im UMTS-Netz oder 90.1.1.1 im WLAN-Netz.

Sind die beiden IP-Adressen bekannt, kann eine herkömmliche IP-Verbindung über das Internet 6 zwischen den beiden Stellen 1, 7 aufgebaut werden.

Hierzu kann sich das mobile Endgerät 1 z. B. eines am Standort verfügbaren WLAN-Zugangsnetzwerks bedienen. Bewegt sich das Endgerät jedoch aus dem Abdeckungsbereich dieses WLAN-Netzwerkes heraus, so würde dies unweigerlich zu einer Unterbrechung einer solchen regulären Verbindung führen.

Eine solche Unterbrechung der IP-Verbindung kann durch die vorliegende Erfindung vermieden werden.

Hierzu sind sowohl beim mobilen Endgerät 1 als auch in einem Netzknoten des Internet 6 Zugangssteuerungsapplikationen 3, 8 in Form von Proxy-Anwendungen (Proxy A und Proxy B) eingerichtet. Jeglicher IP-Verkehr zwischen den Stellen 1 und 7 wird über die Proxys 3 und 8 geroutet.

Der Verbindungswunsch des Endgeräts 1 mit der Gegenstelle basierend auf der Zieladresse 110.4.5.6 wird nun zunächst zum Proxy A geroutet. Proxy A ermittelt, welche Zugangsnetzwerke zum Internet 6 momentan für das Endgerät 1 des Benutzers verfügbar sind. Im vorliegenden Beispiel sind ein UMTS-Zugangsnetzwerk 4 und ein WLAN-Zugangsnetzwerk 5 verfügbar. Aufgrund von Präferenzeinstellungen des Benutzers (z. B. möglichst kostengünstige Verbindungen wählen) wählt Proxy A zum Beispiel das WLAN-Zugangsnetzwerk 5 aus und nimmt Verbindung mit dem netzseitigen Proxy B auf, unter Verwendung dessen Netzwerkadresse 91.2.2.2 im WLAN-Zugangsnetzwerk. Vom Proxy B kann nun die Verbindung zu der Zieladresse 110.4.5.6 des Empfängers im Internet hergestellt werden.

Die entsprechenden Proxyadressen werden zwischen den beiden Proxys 3 und 8 ausgehandelt.

Umgekehrt kann die Gegenstelle 7 den Proxy B über das Internet anhand seiner IP-Adresse 100.2.2.2 ansprechen. Proxy B erreicht Proxy A über das WLAN-Netzwerk 5 unter der Adresse 90.1.1.1, und Proxy A kann dann die Verbindung zur Ursprungsadresse 127.0.0.1 herstellen.

Ist eine Verbindung über das WLAN-Netzwerk 5 aus irgend einem Grunde nicht mehr möglich oder wird unterbrochen, schaltet Proxy A unbemerkt und ohne Unterbrechung der laufenden IP-Applikation auf das UMTS-Zugangsnetzwerk 4 um, sofern dies verfügbar ist. Über das UMTS-Netzwerk 4 kann Proxy A den Proxy B unter der Adresse 81.2.2.2 ansprechen und umgekehrt erreicht Proxy B den Proxy A unter der Adresse 80.1.1.1. Über die Internetadresse des Proxy B 100.2.2.2 besteht nach wie vor eine Verbindung zur gewünschten Zieladresse 110.4.5.6.

## Patentansprüche

1. Verfahren zum Umschalten zwischen mindestens zwei verschiedenen Zugangsnetzwerktechnologien bei einem mobilen Endgerät (1) während einer paketorientierten Datenverbindung mit einer Zieladresse eines Zielnetzwerks (6) ohne Unterbrechung einer aktiven Netzwerkappllkation oder eines Dienstes, wobei mittels einer im Endgerät (1) eingerichteten Zugangssteuerungsapplikation (3) am Standort des Endgerätes verfügbare Zugangsnetzwerke (4; 5) zum Zielnetzwerk (6) ermittelt werden und die Verbindung unter Berücksichtigung von vorgegebenen Kriterien über das jeweils verfügbare Zugangsnetzwerk (4; 5) an die gewünschte Zieladresse geroutet wird und umgekehrt,
**dadurch gekennzeichnet,**
**dass** die Verbindung über eine Zugangssteuerungsapplikation (8) des Zielnetzwerkes geroutet wird, und die Zugangssteuerungsapplikationen (3; 8) die Verfügbarkeit der Zugangsnetzwerke (4; 5) ständig überwachen, indem diese sich in regelmäßigen Abständen Nachrichten über die zur Verfügung stehenden Transportwege senden, und automatisch und ohne Unterbrechung einer aktiven Netzwerkapplikation (2) oder eines Dienstes bedarfsweise zwischen den verfügbaren Zugangsnetzwerken (4; 5) umschalten.

2. Verfahren nach Anspruch 1, **dadurch gekennzeichnet, dass** die Zugangssteuerungsapplikationen (3; 8) als Proxy-Softwareapplikationen auf dem Endgerät (1) und einem Netzelement des Zielnetzwerkes (6) betrieben werden.

3. Verfahren nach einem der vorhergehenden Ansprüche, **dadurch gekennzeichnet, dass** als nutzerseitig konfigurierbare Kriterien in Bezug auf die verfügbaren Zugangsnetze (4; 5) unter anderem Verbindungskosten, Zugangsberechtigungen, technische Fähigkeiten des verwendeten Endgerätes, Sicherheitsaspekte, Übertragungsgeschwindigkeit oder Netzabdeckung berücksichtigt werden.

4. Verfahren nach einem der vorhergehenden Ansprüche, **dadurch gekennzeichnet, dass** eine vom Endgerät (1) angesprochene Netzwerkadresse im Zielnetzwerk in eine Adresse der endgeräteseitigen Zugangssteuerungsapplikation (3) umgewandelt wird, dass in der Zugangssteuerungsapplikation für jedes verfügbare Zugangsnetzwerk (4; 5) die Netzwerkadressen der netzseitigen Zugangssteuerungsapplikation (8) vorhanden sind, und die Verbindung über diese Netzwerkadressen der Zugangssteuerungsapplikation (8) zur Netzwerkadresse im Zielnetzwerk (6) geroutet wird.

5. Verfahren nach einem der vorhergehenden Ansprüche, **dadurch gekennzeichnet, dass** eine vom Zielnetzwerk (6) angesprochene Adresse des Endgeräts (1) in eine Netzwerkadresse der Zugangssteuerungsapplikation (8) umgewandelt wird, dass in der Zugangssteuerungsapplikation (8) für jedes verfügbare Zugangsnetzwerk (4; 5) die Netzwerkadressen der endgeräteseitigen Zugangssteuerungsapplikation (3) vorhanden sind, und die Verbindung über diese Netzwerkadressen der Zugangssteuerungsapplikation (3) an die Netzwerkadresse des Endgerätes (1) geroutet wird.

6. Verfahren nach einem der vorhergehenden Ansprüche, **dadurch gekennzeichnet, dass** die Zugangssteuerungsapplikationen (3; 8) untereinander ständig Informationen über ihre in den jeweiligen Zugangsnetzwerken geltenden IP-Adressen austauschen.

7. System zum Umschalten zwischen mindestens zwei verschiedenen Zugangsnetzwerktechnologien bei einem mobilen Endgerät (1) während
einer paketorientierte Datenverbindung mit einer Zieladresse in einem Zielnetzwerk (6) ohne Unterbrechung einer aktiven Netzwerkapplikation oder eines Dienstes, wobei im Endgerät (1) eine Zugangssteuerungsapplikation (3) eingerichtet ist, die am Standort des Endgerätes verfügbare Zugangsnetzwerke (4; 5) zum Zielnetzwerk (6) ermittelt, deren Verfügbarkeit überwacht und die Datenverbindung unter Berücksichtigung von vorgegebenen Kriterien über das jeweils verfügbare Zugangsnetzwerk (4; 5) an die Zieladresse routet und umgekehrt, **dadurch gekennzeichnet,**
**dass** im Zielnetzwerk eine weitere Zugangssteuerungsapplikation (8) eingerichtet ist, und die Zugangssteuerungsapplikationen (3; 8) Mittel aufweisen zur ständigen Überwachung der Verfügbarkeit der Zugangsnetzwerke (4; 5) indem diese sich in regelmäßigen Abständen Nachrichten über die zur Verfügung stehenden Transportwege senden, und Mittel zum automatischen, bedarfsweisen Umschalten zwischen den verfügbaren Zugangsnetzwerken (4; 5) ohne Unterbrechung einer aktiven Netzwerkapplikation (2) oder eines Dienstes.

## Claims

1. Method for switching between at least two different access network technologies in a mobile terminal (1) during a packet-oriented data connection to a destination address of a destination network (6) without interrupting an active network application or a service, wherein by means of an access control application (3) installed in the terminal (1), access networks (4; 5) to the destination network (6) which are available at the location of the terminal are determined, and, while taking preset criteria into account, the connection is routed via the respectively available access network (4; 5) to the desired destination address and vice versa, **characterised in that** the connection is routed via an access control application (8) of the destination network, and the access control applications (3; 8) constantly monitor the availability of the access networks (4; 5) by the fact that the latter send messages via the available paths of transport at regular intervals, and if necessary switch between the available access networks (4; 5) automatically and without interrupting an active network application (2) or a service.

2. Method according to claim 1, **characterised in that** the access control applications (3; 8) are operated as proxy software applications on the terminal (1) and on a network element of the destination network (6).

3. Method according to one of the preceding claims, **characterised in that** inter alia connection costs, authorisation for access, technical capabilities of the terminal used, security aspects, transmission speed or network coverage are taken into consideration as criteria configurable on the user side in relation to the available access networks (4; 5).

4. Method according to one of the preceding claims, **characterised in that** a network address in the destination network which is targeted by the terminal (1) is converted to an address of the access control application (3) on the terminal side, **in that** in the access control application for each available access network (4; 5) there are the network addresses of the access control application (8) on the network side, and the connection is routed via these network addresses of the access control application (8) to the network address in the destination network (6).

5. Method according to one of the preceding claims, **characterised in that** an address of the terminal (1) which is targeted by the destination network (6) is converted to a network address of the access control application (8), **in that** in the access control application (8) for each available access network (4; 5) there are the network addresses of the access control application (3) on the terminal side, and the connection is routed via these network addresses of the access control application (3) to the network address of the terminal (1).

6. Method according to one of the preceding claims, **characterised in that** the access control applications (3; 8) constantly exchange with each other information on their IP addresses which are effective in the respective access networks.

7. System for switching between at least two different access network technologies in a mobile terminal (1) during a packet-oriented data connection to a destination address in a destination network (6) without interrupting an active network application or a service, wherein in the terminal (1) is installed an access control application (3) which determines access networks (4; 5) to the destination network (6) which are available at the location of the terminal, monitors their availability and, while taking preset criteria into account, routes the data connection via the respectively available access network (4; 5) to the destination address and vice versa, **characterised in that** in the destination network is installed a further access control application (8), and the access control applications (3; 8) have means for constantly monitoring the availability of the access networks (4; 5) by the fact that the latter send messages via the available paths of transport at regular intervals, and means for automatically switching if necessary between the available access networks (4; 5) without interrupting an active network application (2) or a service.

## Revendications

1. Procédé pour le passage entre au moins deux technologies de réseau d'accès différentes, avec un terminal mobile (1), pendant une connexion de données par paquets avec une adresse de destination d'un réseau de destination (6), sans interruption d'une application de réseau active ou d'un service, étant précisé qu'à l'aide d'une application de commande d'accès (3) installée dans le terminal (1), des réseaux d'accès (4 ; 5) au réseau de destination (6) qui sont disponibles à l'endroit du terminal sont déterminés, et la connexion est acheminée en tenant compte de critères prédéfinis, jusqu'à l'adresse de destination souhaitée par l'intermédiaire du réseau d'accès (4 ; 5) disponible, et inversement,
**caractérisé en ce que** la connexion est acheminée par l'intermédiaire d'une application de commande d'accès (8) du réseau de destination, et les applications de commande d'accès (3 ; 8) surveillent en permanence la disponibilité des réseaux d'accès (4 ; 5) en s'envoyant à intervalles réguliers des messages sur les voies de transport disponibles, et passent au besoin d'un réseau d'accès disponible (4 ; 5) à l'autre automatiquement et sans interruption d'une application de réseau (2) active ou d'un service.

2. Procédé selon la revendication 1, **caractérisé en ce que** les applications de commande d'accès (3 ; 8) fonctionnent comme des applications de logiciel proxy sur le terminal (1) et sur un élément de réseau du réseau de destination (6).

3. Procédé selon l'une des revendications précédentes, **caractérisé en ce qu'**on tient compte comme critères configurables côté utilisateur, par rapport aux réseaux d'accès (4 ; 5) disponibles, entre autres des coûts de connexion, des autorisations d'accès, des capacités techniques du terminal utilisé, des aspects de sécurité, de la vitesse de transmission ou de la couverture de réseau.

4. Procédé selon l'une des revendications précédentes, **caractérisé en ce qu'**une adresse de réseau atteinte par le terminal (1) dans le réseau de destination est convertie en une adresse de l'application de commande d'accès côté terminal (3), **en ce que** dans l'application de commande d'accès il y a pour chaque réseau d'accès (4 ; 5) disponible les adresses de réseau de l'application de commande d'accès côté réseau (8), et la connexion est acheminée par l'intermédiaire de ces adresses de réseau de l'application de commande d'accès (8) jusqu'à l'adresse de réseau dans le réseau de destination (6).

5. Procédé selon l'une des revendications précédentes, **caractérisé en ce qu'**une adresse de réseau du terminal (1) atteinte par le réseau de destination (6) est convertie en une adresse de réseau de l'application de commande d'accès (8), **en ce que** dans l'application de commande d'accès (8) il y a pour chaque réseau d'accès (4 ; 5) disponible les adresses de réseau de l'application de commande d'accès côté terminal (3), et la connexion est acheminée par l'intermédiaire de ces adresses de réseau de l'application de commande d'accès (3) jusqu'à l'adresse de réseau du terminal (1).

6. Procédé selon l'une des revendications précédentes, **caractérisé en ce que** les applications de commande d'accès (3 ; 8) échangent en permanence entre elles des informations sur leurs adresses IP valables dans les réseaux d'accès.

7. Système pour le passage entre au moins deux technologies de réseau d'accès différentes, avec un terminal mobile (1), pendant une connexion de données par paquets avec une adresse de destination dans un réseau de destination (6), sans interruption d'une application de réseau active ou d'un service, étant précisé qu'il est prévu, installée dans le terminal (1), une application de commande d'accès (3) qui détermine les réseaux d'accès (4 ; 5) au réseau de destination (6) disponibles à l'endroit du terminal, qui surveille leur disponibilité et qui achemine la connexion de données en tenant compte de critères prédéfinis jusqu'à l'adresse de destination souhaitée par l'intermédiaire du réseau d'accès (4 ; 5) disponible, et inversement,
**caractérisé en ce qu'**une autre application de commande d'accès (8) est installée dans le réseau de destination, et les applications de commande d'accès (3 ; 8) ont des moyens pour surveiller en permanence la disponibilité des réseaux d'accès (4 ; 5), en s'envoyant à intervalles réguliers des messages sur les voies de transport disponibles, et des moyens pour passer au besoin automatiquement d'un réseau d'accès (4 ; 5) disponible à l'autre, sans interruption d'une application de réseau (2) active ou d'un service.
